# EUROPEAN PATENT APPLICATION

(11) **EP 2 583 785 A2**
(43) Date of publication of application: **24.04.2013**
(21) Application number: 12189088.3
(22) Date of filing: 18.10.2012
(51) Int. Cl.: B23K 26/34

(54) **Real time cap flattening during heat treat**

(30) Priority: 21.10.2011 US 201161549890 P; 31.01.2012 US 201213362470
(71) Applicant: Pratt & Whitney Rocketdyne Inc., Canoga Park, CA 91309 (US)
(72) Inventor: Keremes, John J., Canoga Park, CA California 91309 (US); Haynes, Jeffrey D., Canoga Park, CA California 91309 (US); Gao, Youping, Canoga Park, CA California 91309 (US); Matejczyk, Daniel Edward, Canoga Park, CA California 91309 (US); Landau, Joel G., Canoga Park, CA California 91309 (US)
(74) Representative: Hull, James Edward

(57) **Abstract**

An additive manufacturing process includes the steps of measuring a parameter of a part (16) supported within a workspace (12) after a heat treat or other stress relieving process. The measured parameter being a part characteristic that is desired to be within a desired range prior to proceeding with an additional fabrication process. The process further includes the step of applying at least one additional layer (46) on the part (16) based on the measured parameter to adjust the measured parameter to within the desired range.

## Description

### BACKGROUND

This disclosure generally relates to an additive manufacturing machine and process. More particularly, this disclosure relates to a configuration for relieving stress within a part during creation within the additive manufacturing assembly.

Typical manufacturing methods include various methods of removing material from a starting blank of material to form a desired completed part shape. Such methods utilize cutting tools to remove material to form holes, surfaces, overall shapes and more by subtracting material from the starting material. Such subtractive manufacturing methods impart physical limits on the final shape of a completed part. Additive manufacturing methods form desired part shapes by adding one layer at a time and therefore provide for the formation of part shapes and geometries that would not be feasible in part constructed utilizing traditional subtractive manufacturing methods.

Additive manufacturing utilizes a heat source such as a laser beam to melt layers of powdered metal to form the desired part configuration layer upon layer. The laser forms a melt pool in the powdered metal that solidifies. Another layer of powdered material is then spread over the formerly solidified part and melted to the previous melted layer to build a desired part geometry layer upon layer. Repeated localized heating by the laser beam coupled with relatively fast cooling across the surface of the part generates stresses in the part that can limit size and part configuration.

The stresses may be relieved through heat-treating methods. Once heat-treating is complete, surfaces of the part may shift from the original state and not be straight level and consistent.

### SUMMARY

An additive manufacturing process according to an exemplary embodiment of this disclosure including, among outer possible things, measuring a parameter of a part supported within a workspace, the measured parameter required to be within a desired range prior to proceeding with an additional fabrication process and applying at least one additional layer on the part based on the measured parameter to adjust the measured parameter to within the desired range.

In a further embodiment of the foregoing additive manufacturing process the measured parameter comprises a surface flatness of a top surface of the part.

In a further embodiment of any of the forgoing additive manufacturing processes measuring a flatness of the part is performed with a laser profilometer.

In a further embodiment of any of the forgoing additive manufacturing processes measuring a flatness of the part is performed with a measurement device including three-dimensional optics.

In a further embodiment of any of the forgoing additive manufacturing processes including defining a topography of a top surface of the part based on the measured parameter and defining a pattern of material application based on the defined topography.

In a further embodiment of any of the forgoing additive manufacturing processes, including applying a powder metal material over a portion of a top surface of the part to generate a top surface with a flatness within the desired range.

In a further embodiment of any of the forgoing additive manufacturing processes including measuring the measured parameter throughout a stress relieving process.

In a further embodiment of any of the forgoing additive manufacturing processes including continuing an additive manufacturing process responsive to the measured parameter being within the desired range.

An additive manufacturing device according to an exemplary embodiment of this disclosure including, among outer possible things a workspace defining an area for part fabrication, a material application device for spreading a powder within the workspace, an energy transmitting device for generating a molten area of powder for forming a layer of a part a measurement device mounted within the workspace for measuring a parameter of the part, and a controller governing application of material to the part to adjust the parameter to within a desired range based on measurements of the parameter by the measurement device.

In a further embodiment of the foregoing additive manufacturing device the measurement device comprises a laser profilometer.

In a further embodiment of any of the foregoing additive manufacturing devices the measurement device includes three-dimensional optics.

In a further embodiment of any of the foregoing additive manufacturing devices the parameter comprises a flatness of a top surface of the part.

In a further embodiment of any of the foregoing additive manufacturing devices the controller defines topography of a top surface of the part based on measurements taken by the measurement device.

In a further embodiment of any of the foregoing additive manufacturing devices the controller defines a material application pattern based on the defined topography of the top surface of the part.

In a further embodiment of any of the foregoing additive manufacturing devices, including elements supported within the chamber for stress relieving the part, and the measurement device provides for continued measurement of the parameter during the process of stress relieving the part.

A powder bed additive manufacturing process according to an exemplary embodiment of this disclosure including, among outer possible things, monitoring a geometry of an upper surface of a part during a heat treat operation, determining an out of tolerance condition of the geometry, generating a topography of the upper surface in response to determining the out of tolerance condition, and iteratively fusing material with the upper surface in layers based on the topography, thereby flattening the upper surface.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is schematic view of an example additive manufacturing machine.
Figure 2 is a schematic view of the example additive manufacturing machine measuring a surface of a part.
Figure 3 is an example topographic view of a measured surface of a part.
Figure 4 is a schematic view of the example additive manufacturing machine adding material to a top surface of a part.
Figure 5 is a schematic view of the example additive manufacturing machine after the part is brought into a desired range.

### DETAILED DESCRIPTION

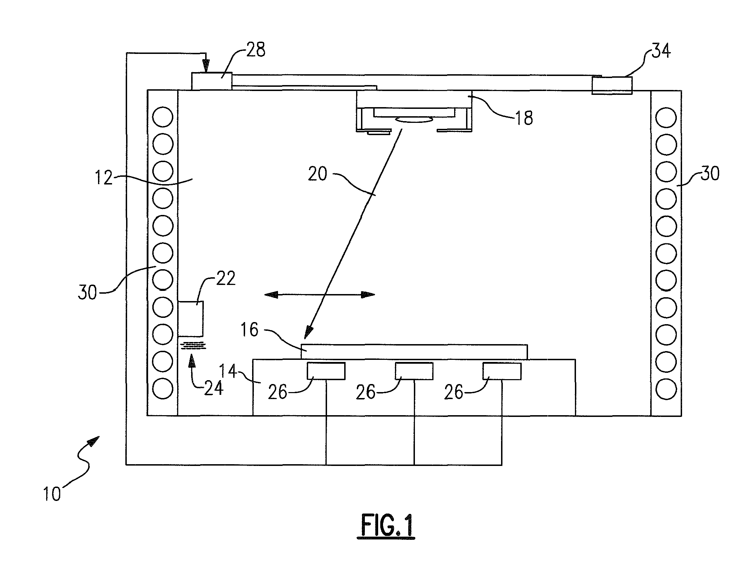

Referring to Figure 1, an additive manufacturing machine 10 includes a chamber 12 that supports an energy transmitting device 18 and a support 14 on which a part 16 is supported during fabrication. In this example, the energy-transmitting device 18 emits a laser beam 20 that melts material 24 deposited by a material applicator 22. The example material 24 is a metal powder that is applied in a layer over the support 14 and subsequent layers to produce a desired configuration of the part 16. The laser beam 20 directs energy that melts the powder material in a configuration that forms the desired part dimensions.

The additive manufacturing process utilizes material 24 that is applied in layers on top of the support 14. Selective portions of the layers are subsequently melted by the energy emitted from the laser beam 20. The additive manufacturing process proceeds by melting subsequent layers of powdered material 24 that are applied to the part 16 to form the desired part configuration.

As appreciated, the energy focused on the top layer of the part 16 generates the desired heat to melt portions of the powdered metal and/or the part 16. The relatively small melt pool generated will then solidify based on convection to the surrounding atmosphere of the chamber 12 and/or conduction through the part 16 and the support 14, thereby forming the desired part configuration. The repeated localized heating and cooling of the powdered material 24 across the top surface 42 of the part 16 can result in the buildup of undesired stresses within the part 16. Stresses within the part 16 may result in undesired cracking or weaknesses within the completed part and therefore are to be avoided.

The example additive manufacturing machine 10 includes features that provide for stress relief of the part 16 within the workspace 12. The features include an electric heater 30 supported within walls of the chamber 12 and a cooler 34 for cooling the part 16 as required for the stress relieve process. Further, the example additive manufacturing machine 10 includes a plurality of sensors 26 that are disposed within the support 14. In this example, the sensors 26 are strain gauges that measure stress built up within the part 16. Also provided within the workspace 12 are measuring devices 40.

During operating and fabrication of the part 16, the strain gauges 26 transmit information to a controller 28 that are indicative of the condition and specifically the stress condition of the part 16. The stress measurements that are provided by the strain gauges 26 are ongoing during the entire fabrication of the part 16. When measured stress within the part 16 falls outside of desired ranges, the stress relieving process is initiated. In this example, the stress relieving process includes a heat treat process where the part 16 is heated then cooled according to a predetermined temperature and period.

In this example, the electric resistant heaters 30 embedded in the walls of the chamber 12 emit heat 32 to heat the part 16. Before the heat treatment process is begun, the chamber 12 may be filled with an inert gas 48 and a cover 19 may be closed to protect the energy transmitting device 18. In this example, the inert gas 48 is Argon.

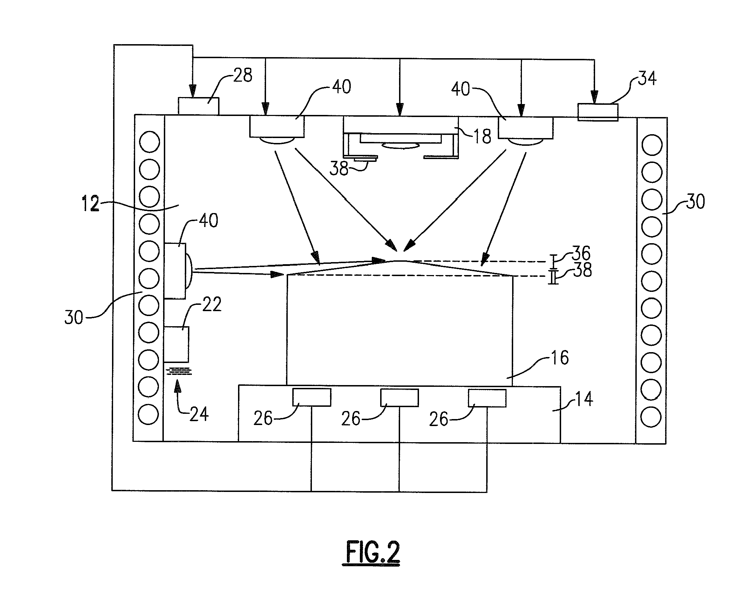

Referring to Figure 2, once the heat treating and/or stress relieving process is complete the heaters 30 and cooler 34 are turned off. The now heat treated part 16 may include a measurable parameter that is not within a desired range preferred for the additive manufacturing process. In this example, the part 16 includes a flatness of the top surface 42 that is schematically shown as being outside of a desired range of flatness. In this example, the top surface 42 includes a peak 36 and valleys 38 that generate the out of range flatness condition.

Accordingly, the example additive manufacturing machine 10 provides for monitoring geometry of the top surface 42 the part during the heat treat process so that any out of tolerance condition of the geometry can be identified. Once an out of tolerance condition is identified a topography of the top surface is defined. Using the defined topography of the out of tolerance top surface 42 an iterative fusing of material on the upper or top surface 42 by layers is performed based on the topography to flattening the top surface 42.

The example additive manufacturing machine 10 includes the measuring devices 40. In this example, the measurement devices include laser profilometers 40 that measures a parameter of the part 16 that in this example is a top surface flatness. As appreciated, although the example measuring device 40 is a laser profilometer, other measuring devices such as a device that utilized three-dimensional optics or other known measuring and profiling devices.

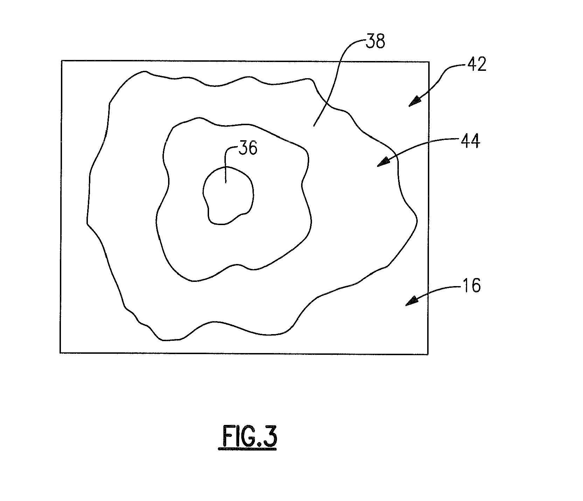

Referring to Figure 3 with continued reference to Figure 2, the laser profilometers 40 generate a topography 44 of the top surface 42 that is utilized to define a pattern of material deposition to correct for the non-flat condition in order to bring the top surface 42 back to within a desired range of flatness. In this example the peaks 36 and valleys 38 are disposed in a non-uniform manner about the top surface 42.

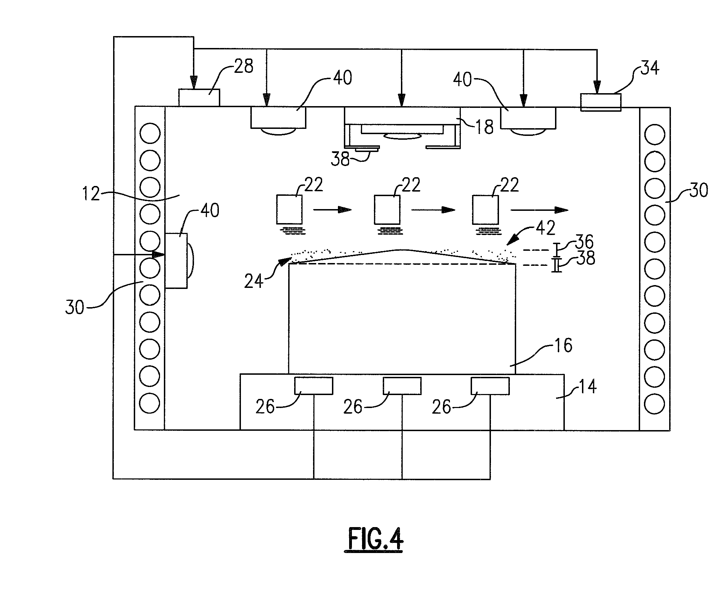

Referring to Figure 4 with continued reference to Figures 2 and 3, the topography 44 of the top surface 42 including the peaks 36 and valleys 38 is utilized by the controller 28 to define a material application protocol. The material application protocol guides the material applicator 22 over the top surface 42 such that it will deposit material primarily on depressions of the top surface 42, such as the valleys 38 in this example, while skipping or applying a lighter layer over the peaks 36. Once the material 24 is applied, the energy directing device 18 will direct the laser beam 20 (shown in Figure 1) to direct energy to build up those areas of the top surface 42 defined by the topography 44 in a given plane. Layer by layer additional material 24 is added to build the top surface 42 to within a desired range of flatness.

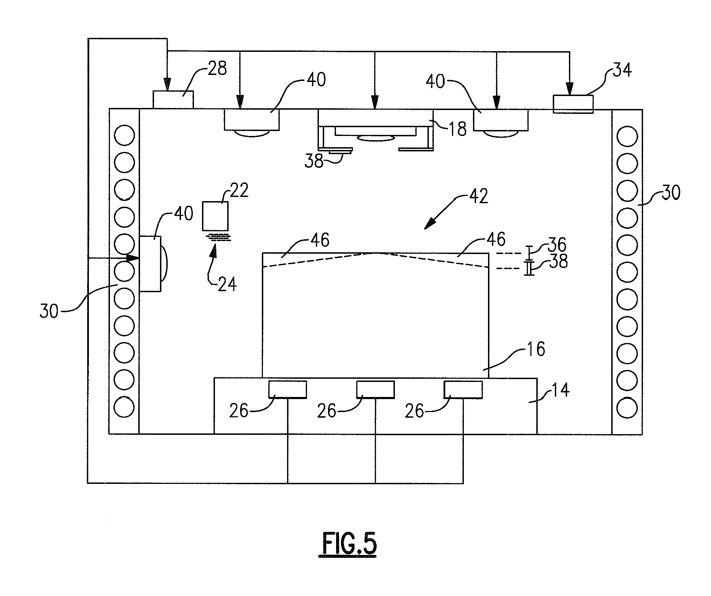

Referring to Figure 5, solidified material 46 deposited in the lower valley areas 38 buildup flatness of the top surface 42 to a desired range determined to provide a proper foundation for further fabrication of the part 16. The measuring devices 40 may be utilized to verify the top surface in real time after application of each layer or number of layers. Moreover, the controller 28 may execute the defined protocol until complete and then initiate a verifying measurement of the top surface. Once the top surface 42 is within a desired flatness range, further fabrication of the part can begin or restarted.

Accordingly, the disclosed advanced manufacturing machine and process of addresses changes in part parameters after stress relieving of a part during fabrication such that fabrication may be resumed without removal of the part 16 from the fabrication chamber 12.

Although an example embodiment has been disclosed, a worker of ordinary skill in this art would recognize that certain modifications would come within the scope of this disclosure. For that reason, the following claims should be studied to determine the scope and content of this invention.

## Claims

1. An additive manufacturing process comprising:
measuring a parameter of a part (16) supported within a workspace (12), the measured parameter required to be within a desired range prior to proceeding with an additional fabrication process; and
applying at least one additional layer (46) on the part (16) based on the measured parameter to adjust the measured parameter to within the desired range.

2. The additive manufacturing process as recited in claim 1, wherein the measured parameter comprises a surface flatness of a top surface (42) of the part (16).

3. The additive manufacturing process as recited in claim 1 or 2, including measuring a flatness of the part (16) with a laser profilometer (40).

4. The additive manufacturing process as recited in any of claims 1 to 3, including measuring a flatness of the part (16) with a measurement device (40) including three-dimensional optics.

5. The additive manufacturing process as recited in any preceding claim, including the step of defining a topography (44) of a top surface of the part (16) based on the measured parameter and defining a pattern of material application based on the defined topography (44).

6. The additive manufacturing process as recited in any preceding claim, including applying a powder metal material (24) over a portion of a top surface (42) of the part (16) to generate a top surface (42) with a flatness within the desired range.

7. The additive manufacturing process as recited in any preceding claim, including the step of measuring the measured parameter throughout a stress relieving process.

8. The additive manufacturing process as recited in any preceding claim, including the step of continuing an additive manufacturing process responsive to the measured parameter being within the desired range.

9. An additive manufacturing device (10) comprising:
a workspace (12) defining an area for part fabrication;
a material application device (22) for spreading a powder (24) within the workspace (12);
an energy transmitting device (18) for generating a molten area of powder (24) for forming a layer of a part (16);
a measurement device (40) mounted within the workspace (12) for measuring a parameter of the part (16); and
a controller (28) governing application of material to the part (16) to adjust the parameter to within a desired range based on measurements of the parameter by the measurement device (40).

10. The additive manufacturing device (10) as recited in claim 9, wherein the measurement device (40) comprises a laser profilometer.

11. The additive manufacturing device (10) as recited in claim 9 or 10, wherein the measurement device (40) includes three-dimensional optics.

12. The additive manufacturing device (10) as recited in any of claims 9 to 11, wherein the parameter comprises a flatness of a top surface (42) of the part (16).

13. The additive manufacturing device (10) as recited in any of claims 9 to 12, wherein the controller (28) defines a topography (44) of a top surface of the part (16) based on measurements taken by the measurement device (40), and optionally wherein the controller (28) defines a material application pattern based on the defined topography (44) of the top surface (42) of the part (16).

14. The additive manufacturing device (10) as recited in any of claims 9 to 13, including elements (30,34) supported within the workspace (12) for stress relieving the part (16), and the measurement device (40) provides for continued measurement of the parameter during the process of stress relieving the part (16).

15. A powder bed additive manufacturing process comprising:
monitoring a geometry of an upper surface (42) of a part (16) during a heat treat operation;
determining an out of tolerance condition of the geometry;
generating a topography (44) of the upper surface (42) in response to determining the out of tolerance condition; and
iteratively fusing material (24) with the upper surface (42) in layers (46) based on the topography (44), thereby flattening the upper surface (42).
